# EUROPÄISCHE PATENTSCHRIFT

(11) **EP 2 990 251 B1**
(45) Veröffentlichungstag und Bekanntmachung des Hinweises auf die Patenterteilung: **31.01.2018**
(21) Anmeldenummer: 15181245.0
(22) Anmeldetag: 17.08.2015
(51) Int. Cl.: B60K 35/00, B60K 37/06, H04B 10/114, G01C 21/36, G06F 3/01, H04N 21/41, H04M 1/60, H04M 1/725, H04N 21/414

(54) **VORRICHTUNG UND VERFAHREN ZUR BEDIENUNG VON MULTIMEDIA-INHALTEN IN EINEM FORTBEWEGUNGSMITTEL**
DEVICE AND METHOD FOR OPERATING MULTIMEDIA CONTENT IN A VEHICLE
DISPOSITIF ET PROCEDE D'UTILISATION DE CONTENUS MULTIMEDIA DANS UN MOYEN DE TRANSPORT

(30) Priorität: 21.08.2014 DE 102014216661
(43) Veröffentlichungstag der Anmeldung: 02.03.2016
(73) Patentinhaber: Volkswagen Aktiengesellschaft, 38440 Wolfsburg (DE)
(72) Erfinder: SKYTTE, Jonas Gottlieb, 8520 Lystrup (DK); WÖLFEL, Christiane, 38436 Wolfsburg (DE); AMBY, Morten Dahl, 8260 Viby J (DK); QUAST, Tom, 8381 Tilst (DK); SØRENSEN, Tor, 8000 Aarhus C (DK); IVERSEN, Lasse, 8000 Aarhus C (DK); ANDERSEN, David Møller, 8000 Aarhus C (DK)
(74) Vertreter: Hoefer & Partner Patentanwälte mbB

(56) Entgegenhaltungen:
- EP-A1- 1 798 588
- WO-A1-2013/074866
- DE-A1-102009 051 202
- US-A1- 2003 042 051

## Beschreibung

### Stand der Technik

Die vorliegende Erfindung betrifft eine Vorrichtung zur Bedienung von Multimedia-Inhalten in einem Fortbewegungsmittel und ein entsprechendes Verfahren. Insbesondere umfasst die vorliegende Erfindung die Einbindung unterschiedlicher Anwender in einen Auswahlprozess sowie andere Interaktionen bezüglich in einem Fortbewegungsmittel bereitgestellter Multimedia-Inhalte.

Moderne Fahrzeuge können unterschiedliche Multimedia-Inhalte zur Auswahl durch einen Anwender auf einem Bildschirm darstellen. Auf der Bildschirmdarstellung können die Dateien repräsentierende Schaltflächen, Labels o. ä. dargestellt, bezüglich ihrer Reihenfolge vertauscht oder aus einer dargestellten Liste gelöscht werden. Im Ansprechend auf einen Wiedergabebefehl wird eine Audio- oder eine Videowiedergabe gestartet. Für die Routenplanung und Definition eines Routenziels (optional unter Einbeziehung von Zwischenzielen) sind ähnliche Bedienschritte und Adresslisten bekannt. Beispielsweise aus einem lokal gespeicherten Adressbuch, welches auch mit einem mobilen Endgerät des Anwenders synchronisiert worden sein kann, können Adresseinträge angewählt und als Zielort übernommen werden.

EP 1 798 588 A1 offenbart ein Bediensystem zum Bedienen von Funktionen in einem Fahrzeugs mit den Merkmalen des Oberbegriffs des Anspruchs 1, welches eine Projektionseinrichtung zum Projizieren fiktiver Bedienelemente auf eine zugeordnete Projektionsfläche im Fahrzeug umfasst. Beispielsweise lassen sich auf den Dachhimmel projizierte virtuelle Bedienelemente eines Infotainmentsystems eines Fortbewegungsmittels durch Berührung auswählen und aktivieren.

WO 2006/130543 A2 offenbart ein Dachsystem für ein Fortbewegungsmittel mit einem transparenten Anzeigepanel. Das Anzeigepanel kann zur Anzeige von Bildern verwendet werden. Auch eine Anwenderschnittstelle ist auf dem Anzeigepanel vorgesehen und weist Instrumente, Anzeigen und per Berührung bedienbare Schalter auf. Auch die Anzeige von Musiktitellisten wird vorgeschlagen.

Aus der US 2003/042051 A1 ist ein Verfahren zur Bedienung von Multimedia-Inhalten in einem Fortbewegungsmittel bekannt. Dabei ist ein Touch-Screen im Dachbereich des Fortbewegungsmittels angeordnet. Der WO 2013/074866 A1 ist ein verschiebliches Anzeigeelement für ein Fahrzeugkontrollsystem zu entnehmen. In der DE 10 2009 051202 A1 wird ein Projizieren von Anzeigeinhalten in einem Fahrzeug beschrieben. Das Projizieren erfolgt mittels eines Head-up-Displays oder Head-down-Displays als Anzeigevorrichtung. Bei der Planung einer Route oder der Erstellung einer Musikwiedergabeliste unterstützen die bekannten Systeme keine interaktiven Vorgänge zwischen den Insassen des Fahrzeugs. Möchten die Insassen gemeinsam eine Wiedergabeliste oder Reihe von Zielen für ein Navigationssystem definieren, sind sie auf eine verbale Kommunikation angewiesen. Es ist daher eine Aufgabe der vorliegenden Erfindung, eine Interaktion von Insassen eines Fortbewegungsmittels bei der Planung und Modifikation zukünftiger gemeinsamer Erlebnisse und Sinneseindrücke zu unterstützen.

### Offenbarung der Erfindung

Die vorstehend genannte Aufgabe wird erfindungsgemäß durch ein Verfahren mit den Merkmalen gemäß Anspruch 1 sowie durch eine Vorrichtung mit den Merkmalen gemäß Anspruch 11 gelöst. Ferner werden ein Fortbewegungsmittel mit den Merkmalen gemäß Anspruch 14, ein Computerprogrammprodukt mit den Merkmalen gemäß Anspruch 15 und eine Signalfolge mit den Merkmalen gemäß Anspruch 16 vorgeschlagen. Das Verfahren dient der Bedienung von Multimedia-Inhalten in einem Fortbewegungsmittel und eignet sich zur gemeinschaftlichen Sichtung und Sortierung elektronischer Dateien mit Bezug auf ein gemeinsames zukünftiges (Sinnes-)Erlebnis. In einem ersten Schritt wird ein erstes Anzeigeelement, repräsentierend eine erste Datei am Dachhimmel eines Fortbewegungsmittels angezeigt. Dies erfolgt durch ein Projizieren des ersten Anzeigeelementes an den Dachhimmel. Alternativ sind nicht erfindungsgemäß Matrixanzeigen, welche am Dachhimmel vorgesehen sind, ebenso verwendbar. Die Anzeigeelemente im Rahmen der vorliegenden Erfindung bilden allgemein gesprochen disjunkt voneinander über den Dachhimmel bewegbare Elemente. Anschließend wird eine Anwendereingabe bezüglich des ersten Anzeigeelementes empfangen. Dies kann beispielsweise eine Berührung des Dachhimmels im Bereich des Anzeigeelementes sein, welche sensorisch erfasst wird. Im Falle einer Projektion kann beispielsweise eine optische Erkennung der Position des Fingers eines Anwenders zum Empfang der Anwendereingabe vorgesehen sein. Andere Gesten, insbesondere 3D-Gesten zur Anwahl des Anzeigeelementes sind jedoch ebenso möglich. Anschließend wird eine mit der Datei verknüpfte Funktion des Fortbewegungsmittels aufgerufen. Dadurch, dass jedes Anzeigeelement am Dachhimmel eine vom Anwender in weitem Rahmen frei wählbare Position einnehmen kann, können eine besonders effiziente Sichtung von Multimedia-Dateien und daher eine schnelle Sortierung derselben stattfinden. Auf diese Weise vorbereitet, können die Dateien eine geeignete Grundlage für ihre spätere Verwendung darstellen. Zudem ist die Bedienung besonders ergonomisch, da der Dachhimmel des Fortbewegungsmittels durch jeden Insassen einfacher berührbar ist, als ein im Armaturenbrett vorgesehener Bildschirm.

Die Unteransprüche zeigen bevorzugte Weiterbildungen der Erfindung.

Optional kann ein zweites Anzeigeelement, repräsentierend eine zweite Datei auf dem Dachhimmel des Fortbewegungsmittels angezeigt werden. Je nach verwendeter Darstellungstechnik kann auch dieses zweite Anzeigeelement auf einem am Dachhimmel vorgesehenen Bildschirm angezeigt oder auf den Dachhimmel projiziert werden. Wie in Verbindung mit dem ersten Anzeigeelement ausgeführt, kann eine Anwendereingabe bezüglich des zweiten Anzeigeelementes empfangen und im Ansprechen darauf eine mit der zweiten Datei verknüpfte Funktion des Fortbewegungsmittels aufgehoben werden. Insbesondere kann die Position des zweiten Anzeigeelementes relativ zum ersten Anzeigeelement vom Anwender wahlfrei in zwei Dimensionen verändert werden. Ein solcher Vorgang unterstützt eine intuitive Sortierung angezeigter Anzeigeelemente bzw. Dateien.

Die erste oder die zweite Datei kann beispielsweise eine Bilddatei, insbesondere eine Fotografie, bevorzugt um fassend eine geografische Positionsangabe (Geo-Tag) umfassen. Die Bilddatei kann insbesondere durch eine beispielsweise verkleinerte Darstellung der Bilddaten bzw. der Fotografie als Anzeigeelement repräsentiert werden. Auch eine Audio-/Video- oder Multimedia-Datei kann als erste und/oder als zweite Datei am Dachhimmel repräsentiert sein. Zur intuitiv erfassbaren Repräsentation der jeweiligen Datei kann beispielsweise ein der Audiodatei zugeordnetes Cover oder ein Bild des Interpreten dargestellt werden. Entsprechendes gilt für die Videodatei, welche ein Standbild aus dem Videomaterial und/oder ein Cover eines Datenträgers und/oder eine Fotografie eines beteiligten Darstellers umfasst.

Der Dachhimmel kann in zwei aneinander grenzende Flächen unterteilt sein, wobei die vorstehend beschriebene Interaktion mit den Anzeigeelementen hauptsächlich auf einer ersten, horizontalen Fläche stattfindet. Auf einer, die erste Fläche zumindest anteilig umgebenden, zumindest anteilig stärker geneigten Fläche können Bilddateien größerer Abmessungen dargestellt werden. Insbesondere können in den verfügbaren Bilddateien enthaltene Geo-Tags darüber entscheiden, ob in Abhängigkeit der Position und/oder Fahrtrichtung des Fortbewegungsmittels eine jeweilige Bilddatei zur Anzeige gebracht werden soll. Auch die Position innerhalb der zweiten Fläche kann in Abhängigkeit einer aktuellen Position (oder Himmelsrichtung) des in der Datei dargestellten Objektes bzw. der Geo-Tag-Position bezüglich der aktuellen Position des Fortbewegungsmittels automatisch gewählt und bevorzugt kontinuierlich angepasst werden. Mit anderen Worten kann die Bilddatei ausgehend von der Fahrzeugmitte in derselben Richtung wie das abgebildete Objekt bzw. die Geo-Tag-Information angeordnet werden. Eine zusätzliche erfindungsgemäße Interaktion (z.B. Verschieben) mit den auf der zweiten Fläche Bilddateien bleibt dem Anwender unbenommen.

Die Anwendereingabe, mittels welcher die Anzeigeelemente gehandhabt werden, kann beispielsweise eine Ziehen & Fallenlassen (eng. "Drag & Drop")-Geste umfassen, mittels welcher insbesondere eine vordefinierte Zielposition für ein jeweiliges Anzeigeelement gewählt wird. Wird beispielsweise eine Audiodatei auf eine entsprechend vordefinierte Zielposition verschoben, kann die Audiodatei wiedergegeben und/oder einer Wiedergabeliste hinzugefügt werden. Entsprechend kann eine Videodatei (insbesondere ein Foto mit einem Geo-Tag) auf eine entsprechend vordefinierte Zielposition verschoben werden, um die Geografische Angabe innerhalb der Videodatei als Zieladresse eines Navigationssystems des Fortbewegungsmittels zu verwenden. Alternativ oder zusätzlich können zwei Dateien aufeinander zu bzw. übereinander verschoben werden, um beispielsweise eine Wiedergabeliste zu erstellen, oder zukünftig eine Videodatei als erste Datei für eine Audiodatei als zweite Datei als Anzeigeelement zu verwenden.

Die durch die Anwenderinteraktion mit dem Anzeigeelement aufgerufene Funktion kann beispielsweise einer Wiedergabefunktion oder einer Wiedergabelistenfunktion eines Infotainmentsystems des Fortbewegungsmittels zugeordnet sein. Alternativ oder zusätzlich können derart in Beziehung zueinander gebrachte Anzeigeelemente eine solche Funktion starten, mittels welcher weitere ähnliche Titel in einer lokalen oder Internet-basierten Datenbank gesucht und optional automatisch (zur Wiedergabeliste oder zum Dachhimmel) hinzugefügt werden. Alternativ oder zusätzlich kann die aufgerufene Funktion einem Navigationssystem zugeordnet sein, durch welche ein Ziel oder ein Zwischenziel einer Routenführung definiert und/oder die Routenführung gestartet wird. Auf diese Weise kann mittels einfacher Gesten und ohne die Verwendung eines hierarchischen Menüs ein schneller Zugriff auf Funktionen des Fortbewegungsmittels genommen werden, ohne dass der Fahrer längere Zeit vom Verkehrsgeschehen abgelenkt wird.

Bevorzugt kann das erfindungsgemäße Verfahren ein Übertragen eines die erste Datei repräsentierenden Datensatzes aus einem Speicher eines mobilen Anwenderendgerätes an das Fortbewegungsmittel umfassen. Der Datensatz kann insbesondere die erste Datei selbst sein. Alternativ kann ein Link auf den betreffenden Speicherbereiches des mobilen Anwenderendgerätes als Datensatz übertragen werden, um die Datei erst im Falle eines anwenderseitigen Funktionsaufrufes zu übertragen oder direkt vom mobilen Anwenderendgerät zu verwenden. Beispielsweise kann hierbei ein vordefinierter Speicherbereich des Fortbewegungsmittels beschrieben werden, in welchem ähnliche Dateien bereits zu einem früheren Zeitpunkt abgelegt wurden. Auf diese Weise ist eine erfindungsgemäß umfassende Darstellung von Multimedia-Inhalten am Dachhimmel des Fortbewegungsmittels möglich, ohne dass die Bibliotheken der im Fortbewegungsmittel befindlichen Insassen bzw. ihrer mobilen Anwenderendgeräte von der erfindungsgemäßen Darstellung ausgeschlossen sind. Die Übertragung der Daten beispielsweise in herkömmlicher Art und Weise mittels Bluetooth (z.B. A2DP) und/oder WLAN erfolgen.

Weiter kann das Verfahren ein Anzeigen eines Symbols für ein Infotainmentsystem am Dachhimmel umfassen. Eine in Verbindung mit dem Anzeigeelement aufgerufene Funktion kann beispielsweise einer Wiedergabefunktion oder einer Wiedergabelistenfunktion eines Infotainments des Fortbewegungsmittels zugeordnet sein. Alternativ oder zusätzlich können derart in Beziehung zueinander gebrachte Anzeigeelemente eine solche Funktion starten, mittels welcher weitere ähnliche Titel in einer lokalen oder Internet-basierten Datenbank gesucht und optional automatisch hinzugefügt werden. Alternativ oder zusätzlich kann die aufgerufene Funktion einem Navigationssystem zugeordnet sein, indem sie ein Ziel oder ein Zwischenziel einer Routenführung definiert und/oder die Routenführung startet. Auf diese Weise kann mittels einfacher Gesten und ohne die Verwendung eines hierarchischen Menüs ein schneller Zugriff auf Funktionen des Fortbewegungsmittels genommen werden, ohne dass der Fahrer längere Zeit vom Verkehrsgeschehen abgelenkt wird.

Bevorzugt kann das erfindungsgemäße Verfahren ein Übertragen eines die erste Datei repräsentierenden Datensatzes aus einem Speicher eines mobilen Anwenderendgerätes an das Fortbewegungsmittel umfassen. Der Datensatz kann insbesondere die erste Datei selbst sein. Beispielsweise kann hierbei ein vordefinierter Speicherbereich des Fortbewegungsmittels beschrieben werden, in welchem ähnliche Dateien bereits zu einem früheren Zeitpunkt abgelegt wurden. Auf diese Weise ist eine erfindungsgemäß umfassende Darstellung von Multimedia-Inhalten am Dachhimmel des Fortbewegungsmittels möglich, ohne dass die Bibliotheken der im Fortbewegungsmittel befindlichen Insassen bzw. Ihrer mobilen Anwenderendgeräte von der erfindungsgemäßen Darstellung ausgeschlossen sind. Die Übertragung der Daten kann beispielsweise in herkömmlicher Art und Weise mittels Bluetooth und/oder WLAN erfolgen.

Weiter kann das Verfahren ein Anzeigen eines Symbols für eine Wiedergabeliste am Dachhimmel umfassen. Das Symbol kann beispielsweise freie Plätze aufweisen, welche mit den Konturen der ebenfalls am Dachhimmel dargestellten Anzeigeelemente korrespondieren (Schlüssel-Schloss-Beziehung). Die leeren Plätze können als potentielle Zielpositionen für das Anzeigeelement verwendet werden, um mit ihnen verknüpfte Dateien entsprechend der dargestellten Reihenfolge zu veranlassen. Das Anzeigeprinzip (Bildschirm, Projektion o.ä.) für das Symbol der Wiedergabeliste kann insbesondere dasselbe sein, welches für die Anzeigeelemente verwendet wird. Alternativ oder zusätzlich kann auf dieselbe Weise ein Symbol für eine Navigationsfunktion angezeigt werden, welches eine potentielle Zielposition für die angezeigten Anzeigeelemente (insbesondere Videodateien und Kontakte) zum definieren eines Routenziels repräsentiert. Auch das Symbol für die Navigationsfunktion kann einen leeren Platz mit einer solchen Kontur aufweisen, welche mit der Kontur solcher Anzeigeelemente korrespondiert, welche zum Definieren eines Routenziels geeignet sind. Beispielsweise können Musikdateien, welche keinen Bezug zu einer geografischen Angabe enthalten (weder im Titel noch im Text noch in Meta-Informationen der Datei), eine runde Kontur aufweisen, während die potentielle Zielposition für die Navigationsfunktion eine eckige Kontur aufweist. Auf diese Weise können unterschiedliche Konturen für Anzeigeelemente repräsentierend unterschiedliche Dateitypen verwendet werden, um eine intuitive Zuordnung durch den Anwender zu angebotenen Funktionsumfängen des Fortbewegungsmittels zu unterstützen.

Um die Verschieblichkeit der Anzeigeelemente spielerisch und optisch ansprechend zu veranschaulichen, kann eine aktuelle Beschleunigung des Fortbewegungsmittels (Längs/Quer-Beschleunigung oder -verzögerung) erfasst werden und im Ansprechen darauf das erste Anzeigeelement und/oder das zweite Anzeigeelement, insbesondere jegliche Anzeigeelemente und/oder angezeigte Symbole, entsprechend einer ihnen zugeordneten virtuellen Trägheit automatisch zu bewegen. Beispielsweise kann hierbei eine elastische Aufhängung bzw. Fixierung der dargestellten Anzeigeelemente/Symbole simuliert werden, sodass nach dem Abklingen des Beschleunigungsvorgangs die Anzeigeelemente und/oder Symbole in ihre ursprüngliche Position zurückkehren. Hierbei kann auch ein abklingender elastischer Vorgang simuliert werden, um die individuelle Bewegbarkeit der Anzeigeelemente zu veranschaulichen. Mit dem erfindungsgemäßen Verfahren nicht vertraute Anwender werden auf diese Weise spielerisch an die Möglichkeit einer erfindungsgemäßen Bedienung herangeführt, ohne dass sie hierzu eine Bedienungsanleitung konsultieren oder einen zusätzlichen Hinweis erhalten müssten.

Je nach Art der Datei kann es vorteilhaft sein, einen Kontextbereich zu dem ersten/zweiten Anzeigeelement anzuzeigen, in welchem in der Datei enthaltene Textinformationen (z. B. ein Dateiname, Metainformationen, Geo-Tags o. ä.) angezeigt werden. Alternativ oder zusätzlich können zusätzliche, beispielsweise von außerhalb des Fortbewegungsmittels empfangene, Textinformationen ermittelt und dem Kontext-Bereich hinzugefügt werden. Hierbei kann beispielsweise ein Suchalgorithmus aus den am Dachhimmel repräsentierten Dateien ein Interessensprofil des jeweiligen Anwenders ableiten und beispielsweise verwandte Informationen entlang einer gefahrenen Route und/oder aktuelle Hinweise zu Veranstaltungen der urhebenden Künstler geben. Solche Informationen können beispielsweise über das Internet bezogen werden. Hierbei können Online-Nachschlagewerke, wie z. B. www.Wikipedia.org, konsultiert werden. Alternativ oder zusätzlich können auch entlang einer vordefinierten Route liegende Orte auf einen Bezug zu dem Inhalt der Datei untersucht und ggf. ermittelte Bezüge im Kontext-Bereich angezeigt werden.

Gemäß einem zweiten Aspekt der vorliegenden Erfindung wird eine Vorrichtung zur Bedienung von Multimedia-Inhalten in einem Fortbewegungsmittel vorgeschlagen. Das Fortbewegungsmittel kann beispielsweise ein Pkw, ein Transporter, ein Lkw, ein Land- und/oder Luftfahrzeug sein. Die Vorrichtung umfasst eine Eingabeeinheit, eine Auswerteeinheit und eine Anzeigeeinheit. Die Anzeigeeinheit ist als Projektor ausgestaltet. Alternativ kann die Anzeigeeinheit nicht erfindungsgemäß einen am Dachhimmel angeordneten Bildschirm umfassen. Sie ist eingerichtet, ein erstes Anzeigeelement, repräsentierend eine erste Datei optisch am Dachhimmel des Fortbewegungsmittels anzuzeigen. Die Anzeigeelemente bilden disjunkt voneinander über den Dachhimmel bewegbare Elemente, welche durch vordefinierte Anwenderinteraktion in eine gewünschte Beziehung zueinander gesetzt werden können. Eine solche zweidimensionale Verschiebbarkeit der Anzeigeelemente geht somit weit über eine Neusortierung einer eindimensionalen Liste hinaus. Die Eingabeeinheit ist eingerichtet, eine Anwendereingabe bezüglich des ersten Anzeigeelementes zu erfassen. Dies kann beispielsweise eine berührende Geste auf das angezeigte Anzeigeelement am Dachhimmel umfassen. Alternativ oder zusätzlich können auch frei im Raum ausgeführte 3D zur Interaktion mit den angezeigten Anzeigeelementen vordefiniert sein. Die Auswerteeinheit ist eingerichtet, im Ansprechen auf die erfasste Anwendereingabe eine mit der Datei verknüpfte Funktion des Fortbewegungsmittels aufzurufen. Hierbei kann ein Verschieben des Anzeigeelementes in einen vordefinierten Bereich (Zielposition) oder eine Veränderung eines Abstandes eines ersten Anzeigeelementes von einem zweiten Anzeigeelement den Start der Funktion bedingen. Allgemein ist die erfindungsgemäße Vorrichtung eingerichtet, ein Verfahren auszuführen, wie es in Verbindung mit dem erstgenannten Erfindungsaspekt im Detail beschrieben worden ist. Die Merkmale, Merkmalskombinationen und die sich aus diesen ergebenden Vorteile entsprechend denen des erfindungsgemäßen Verfahrens derart ersichtlich, dass zur Vermeidung von Wiederholungen auf die obigen Ausführungen verwiesen wird.

Bevorzugt umfasst die Vorrichtung weiter eine Schnittstelle zur Übertragung von Dateien von einem mobilen Anwenderendgerät an einen Speicher des Fortbewegungsmittels. Auf diese Weise können Fotos, Audio- und/oder Videodateien sowie Adressbucheinträge erfindungsgemäß in Form von Anzeigeelementen am Dachhimmel repräsentiert werden. Bei der Anzeige von Adressbucheinträgen können beispielsweise Telefonanrufe, Videotelefonate oder Telefonkonferenzen durch Verschieben der Adressbucheinträge auf einen Telefoniebereich (z. B. ein Telefonsymbol oder ein virtueller Konferenztisch) gestartet werden.

Gemäß einem dritten Aspekt der vorliegenden Erfindung wird ein Fortbewegungsmittel mit einem Dachhimmel und einer Vorrichtung gemäß dem zweitgenannten Erfindungsaspekt vorgeschlagen. Das Fortbewegungsmittel kann insbesondere eine zweite und bevorzugt eine dritte Sitzreihe umfassen, wodurch der Dachhimmel eine besonders große und daher übersichtliche Anzeigeeinheit bereitstellt. Das Sortieren von Dateien in Form von Anzeigeelementen vereinfacht sich auf diese Weise erheblich.

Gemäß einem vierten Erfindungsaspekt wird ein Computerprogrammprodukt (z. B. ein Datenspeicher) vorgeschlagen, auf welchem Instruktionen gespeichert sind, die einen programmierbaren Prozessor in die Lage versetzen, die Schritte eines Verfahrens gemäß dem erstgenannten Erfindungsaspekt durchzuführen. Das Computerprogrammprodukt kann als CD, DVD, Blueray-Disk, Flash-Speicher, Festplatte, Ram/Rom, Cache etc. ausgestaltet sein.

Gemäß einem fünften Aspekt der vorliegenden Erfindung wird eine Signalfolge repräsentierend Instruktionen vorgeschlagen, welche einen programmierbaren Prozessor in die Lage versetzen, die Schritte eines Verfahrens gemäß dem erstgenannten Erfindungsaspekt durchzuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

Der programmierbare Prozessor kann beispielsweise Bestandteil einer Auswerteeinheit der erfindungsgemäßen Vorrichtung bzw. des erfindungsgemäßen Fortbewegungsmittels sein.

Je nachdem, welche Aktualität ein am Dachhimmel angezeigtes Anzeigeelement aufweist (z. B. weil es bereits längere Zeit nicht mehr von einem Anwender zugegriffen wurde oder weil es aufgrund seiner Kategorie nicht für aktuell vom Fahrzeug ausgeführte Funktionen infrage kommt), kann die Darstellungsgröße des Anzeigeelementes automatisch verändert werden. Beispielsweise können bereits längere Zeit nicht mehr zugegriffene Anzeigeelemente verkleinert (miniaturisiert oder punktförmig) dargestellt und durch eine Anwenderinteraktion vergrößert ("in den Vordergrund geholt") werden. Auf diese Weise bleibt die Übersicht trotz einer erheblichen Vielzahl angezeigter Anzeigeelemente situationsbezogen gewahrt.

### Kurze Beschreibung der Zeichnung(en)

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht auf Komponenten eines Ausführungsbeispiels einer erfindungsgemäßen Vorrichtung;
- Figur 2: eine perspektivische Darstellung von Anwenderinteraktionen mit einer erfindungsgemäßen Vorrichtung;
- Figur 3: eine schematische Darstellung einer Drag & Drop-Geste;
- Figur 4: eine schematische Darstellung einer aufgrund einer virtuellen Trägheit eines Anzeigeelementes fortgesetzten Bewegung nach dem Ausführen einer Drag-Geste;
- Figur 5: eine perspektivische Darstellung von Anwenderinteraktionen mit einem weiteren Ausführungsbeispiel einer erfindungsgemäßen Vorrichtung und
- Figur 6: ein Flussdiagramm veranschaulichend Schritte eines Ausführungsbeispiels eines erfindungsgemäßen Verfahrens.

### Ausführungsformen der Erfindung

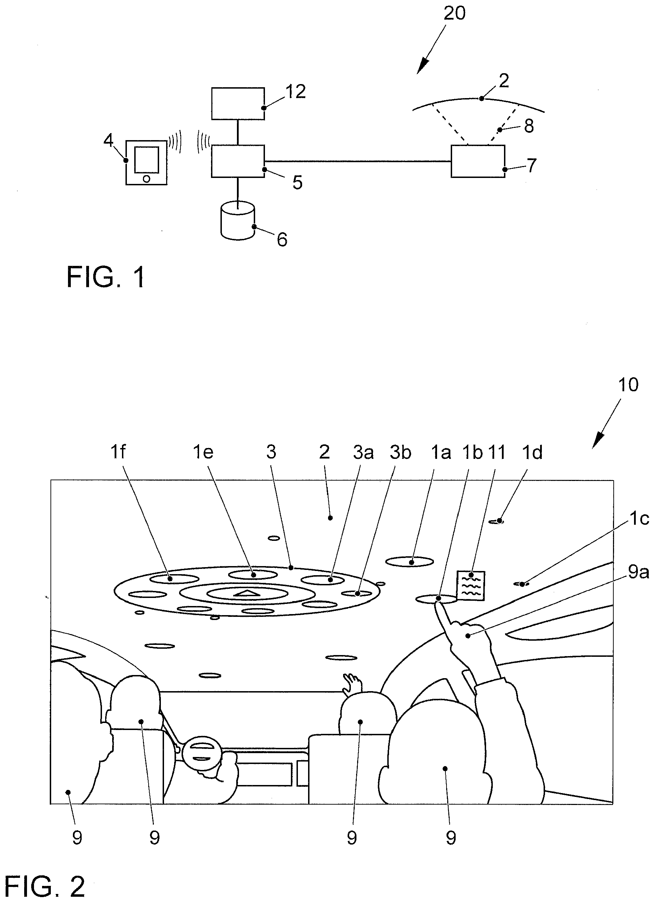

Figur 1 zeigt eine Vorrichtung 20 zur Bedienung von Multimedia-Inhalten in einem Fortbewegungsmittel. Die Multimedia-Inhalte werden von einem Smartphone 4 an ein elektronisches Steuergerät 5 als Auswerteeinheit drahtlos übertragen. Anschließend werden sie in einem Datenspeicher 6 abgespeichert. Eine Eingabeeinheit 12 ist eingerichtet, Anwenderinteraktionen mit über einen Projektor 7 an einen Dachhimmel 2 projizierten Anzeigeelementen (nicht dargestellt) zu erkennen. Der Projektor 7 ist als Kurzdistanzprojektor ausgestaltet, weshalb das von ihm ausgestrahlte Licht 8 den Dachhimmel weitwinkelig anstrahlt.

Figur 2 zeigt den Innenraum eines Pkws 10 als Fortbewegungsmittel, an dessen Dachhimmel 2 Albumcover 1 a, 1 b, 1 c, 1 d, 1 e, 1 f als Anzeigeelemente projiziert werden. Ein Kontext-Bereich 11 stellt in Textform weitere Informationen zur durch das Albumcover 1 b repräsentierten Musikdatei dar. Die Informationen im Kontext-Bereich 11 haben das Interesse eines Anwenders 9 geweckt, welcher mittels seiner Hand 9 a mit dem Albumcover 1 b interagiert, um zusätzliche Informationen anzuzeigen. Ein Wiedergabebereich 3 als Symbol ist in Form einer kreisscheibenförmigen Projektion mit freien Kreisformen 3 a, 3 b als vordefinierte Zielposition für Anzeigeelemente vorgesehen. Zwei Albumcover 1 e, 1 f haben ihren Weg in das Symbol 3 bereits gefunden und warten darauf, dass die mit ihnen verknüpften Musikdateien wiedergegeben werden.

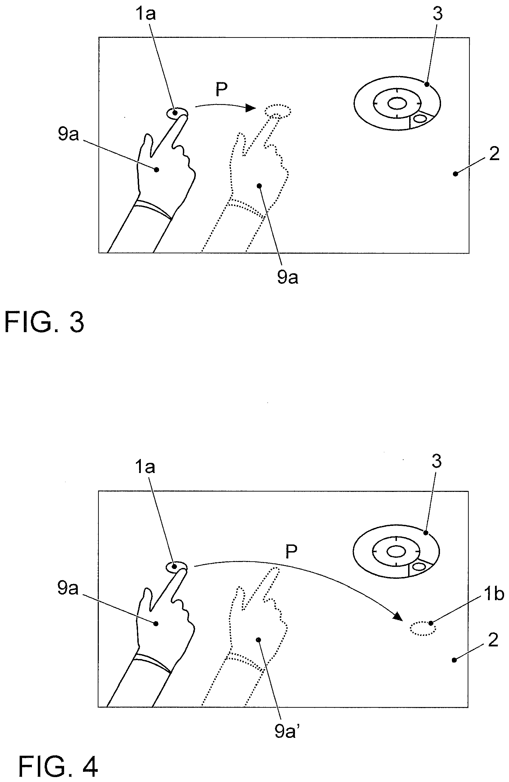

Figur 3 zeigt ein an einen Dachhimmel 2 projiziertes Anzeigeelement 1 a, welches durch die Hand 9 a eines Anwenders entlang eines Pfeils P an eine neue Position in Richtung eines Wiedergabebereiches 3 als Symbol verschoben wird.

Figur 4 zeigt eine Geste mit der Hand 9 a eines Anwenders, mittels welcher ein Anzeigeelement 1 a in Richtung eines zweiten Anzeigeelementes 1 b entlang eines Pfeils P verschoben wird. Während die Bewegung der Hand an der Position der gestrichelt dargestellten Position der Hand 9 a' endet, führt eine virtuelle Trägheit des Anzeigeelementes 1 a dazu, dass das Anzeigeelement 1 a weiter in Richtung des zweiten Anzeigeelementes 1 b rutscht, wo es schließlich elastisch mit diesem zusammenprallt.

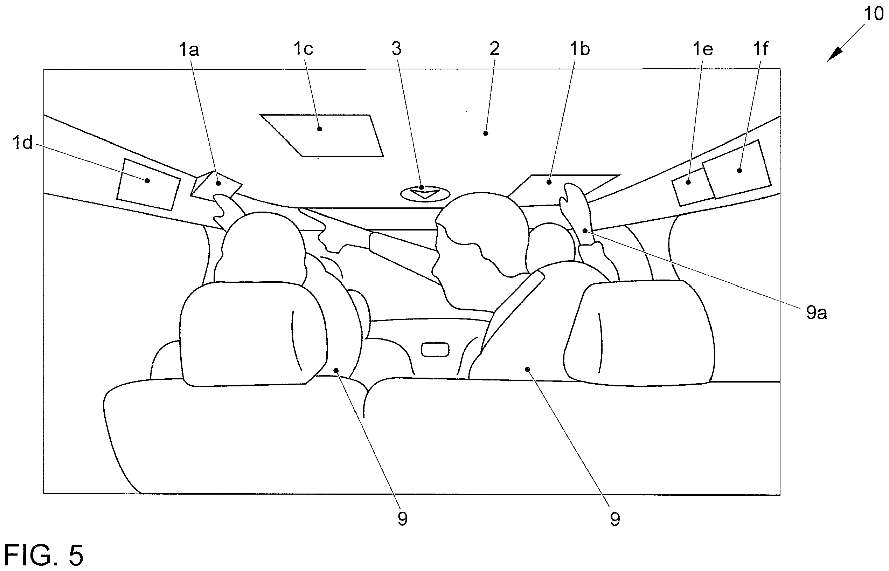

Figur 5 zeigt ein Ausführungsbeispiel eines erfindungsgemäßen Fortbewegungsmittels 10, in welchem Videodateien 1 a, 1 b, 1 c, 1 d, 1 e, 1 f als Anzeigeelemente am Dachhimmel 2 angezeigt und durch die Hände 9 a der Insassen 9 bewegt werden. In etwa oberhalb der Mittelkonsole des Fortbewegungsmittels 10 ist ein Kompass 3 als Symbol für ein Navigationssystem angezeigt. Wird eines der Bilder 1 a, 1 b, 1 c, 1 d, 1 e, 1 f auf den Kompass 3 verschoben, fragt die Vorrichtung den Anwender, ob ein in der durch die Videodatei 1 a, 1 b, 1 c, 1 d, 1 e, 1 f repräsentierten Datei enthaltener Geo-Tag als Zielkoordinaten für eine Routenführung verwendet werden soll. Bejaht der Anwender die Abfrage, wird er als nächstes gefragt, ob die Zielführung gestartet werden soll. Bejaht der Anwender auch diese Abfrage, startet die Zielführung unverzüglich.

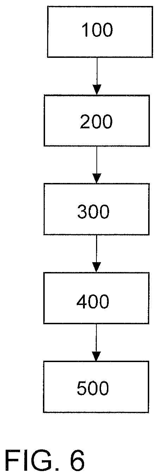

Figur 6 zeigt Schritte eines Ausführungsbeispiels eines erfindungsgemäßen Verfahrens zur Bedienung von Multimedia-Inhalten in einem Fortbewegungsmittel. In einem Schritt 100 verbindet ein Anwender sein Smartphone als mobiles Anwenderendgerät mit einer Kommunikationseinrichtung des Fortbewegungsmittels. Bestätigt der Anwender eine Anfrage zur Übertragung von Multimedia-Dateien an das Fortbewegungsmittel, startet in Schritt 200 die Übertragung der Dateien an einen Speicher des Fortbewegungsmittels. In Schritt 300 werden die Multimedia-Dateien repräsentierende Anzeigeelemente erzeugt und auf den Dachhimmel des Fortbewegungsmittels projiziert. Um eine mit einer der Multimedia-Dateien assoziierte Fahrzeugfunktion aufzurufen, wird in Schritt 400 eine Anwendereingabe bezüglich eines der angezeigten Anzeigeelemente empfangen. Hierbei schiebt der Anwender das Anzeigeelement auf eine vordefinierte Zielposition, wodurch die gewünschte Funktion bezüglich der mit dieser verknüpften Datei aufgerufen wird.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1 a - 1 f: Anzeigeelemente (Albumcover, Videodateien)
- 2: Dachhimmel
- 3: Symbol/vordefinierte Zielposition (Kompass)
- 4: Smartphone
- 5: Elektronisches Steuergerät
- 6: Speichermittel
- 7: Kurzdistanzprojektor
- 8: Lichtstrahl
- 9: Insasse/Anwender
- 9 a: Hand des Insassen/Anwenders
- 10: Pkw
- 11: Kontext-Bereich
- 12: Eingabeeinheit
- 100 - 500: Verfahrensschritte

## Patentansprüche

1. Verfahren zur Bedienung von Multimedia-Inhalten in einem Fortbewegungsmittel (10) umfassend die Schritte
- optisches Projizieren eines ersten Anzeigeelementes (1a) repräsentierend eine erste Datei am Dachhimmel (2) eines Fortbewegungsmittels (10),
- Empfangen (400) einer Anwendereingabe bezüglich des ersten Anzeigeelementes (1a) und im Ansprechen darauf,
- Aufrufen (500) einer mit der Datei verknüpften Funktion des Fortbewegungsmittels (10), **dadurch gekennzeichnet, dass** das Anzeigeelement (1a) zweidimensional verschieblich ist.

2. Verfahren nach Anspruch 1 weiter umfassend
- optisches Projizieren eines zweiten Anzeigeelementes (1b) repräsentierend eine zweite Datei auf den Dachhimmel (2) des Fortbewegungsmittels (10),
- Empfangen einer Anwendereingabe bezüglich des zweiten Anzeigeelementes (1b) und im Ansprechen darauf,
- Aufrufen einer mit der zweiten Datei (1b) verknüpften Funktion des Fortbewegungsmittels (10).

3. Verfahren nach Anspruch 2, wobei die erste Datei und/oder die zweite Datei
- eine Bilddatei, insbesondere eine Fotografie, bevorzugt umfassend eine geografische Positionsangabe, und/oder
- eine Audiodatei, und/oder
- eine Videodatei, und/oder
- eine Multimedia-Datei ist.

4. Verfahren nach einem der vorstehenden Ansprüche, wobei
- die Anwendereingabe eine Ziehen und Fallenlassen, im Folgenden "Drag-and-Drop" genannt, -Geste (P) umfasst, wobei insbesondere
- die erste Datei oder die zweite Datei
- auf eine vordefinierte Zielposition (3, 3a, 3b), und/oder
- aufeinander
verschoben werden.

5. Verfahren nach einem der vorstehenden Ansprüche, wobei
- die aufgerufene Funktion des Fortbewegungsmittels (10)
- einem Infotainmentsystem, insbesondere einer Wiedergabefunktion oder einer Wiedergabelistenfunktion, und/oder
- einem Navigationssystem, insbesondere einer Definition eines Ziels oder eines Zwischenziels und/oder einem Start einer Routenführung, zugeordnet ist.

6. Verfahren nach einem der vorstehenden Ansprüche, weiter umfassend
- Übertragen (200) eines die erste Datei repräsentierenden Datensatzes, insbesondere der ersten Datei selbst, aus einem Speicher eines mobilen Anwenderendgerätes (4) an einen Speicher (6) des Fortbewegungsmittels (10).

7. Verfahren nach einem der vorstehenden Ansprüche, weiter umfassend
- optisches Projizieren eines Symbols für eine Wiedergabeliste, in welchem insbesondere mindestens ein leerer Platz als potentielle Zielposition für das Anzeigeelement (1a) enthalten ist, und/oder
- optisches Projizieren eines Symbols für eine Navigationsfunktion, welche, insbesondere umfassend eine Kompassdarstellung, eine potentielle Zielposition für das Anzeigeelement (1a) zum Definieren eines Routenziels repräsentiert.

8. Verfahren nach einem der vorstehenden Ansprüche, weiter umfassend
- Erfassen einer Beschleunigung des Fortbewegungsmittels, und im Ansprechen darauf
- automatisches Bewegen des ersten Anzeigeelementes (1a) entsprechend einer virtuellen Trägheit des Anzeigeelementes (1a).

9. Verfahren nach einem der vorstehenden Ansprüche, weiter umfassend
- Anzeigen eines Kontext-Bereiches (11) zu dem Anzeigeelement (1b), in welchem
- in der Datei enthaltene Textinformationen, und/oder
- von außerhalb des Fortbewegungsmittels (10) empfangene Textinformationen angezeigt werden.

10. Verfahren nach einem der vorstehenden Ansprüche, weiter umfassend
- Auswerten von Meta-Informationen einer durch das erste Anzeigeelement (1a) repräsentierten Datei, und im Ansprechen darauf,
- automatisches Ermitteln von weiteren Informationen bezüglich der MetaInformationen, über das Internet, insbesondere über ein online-Nachschlagewerk, welche insbesondere einen Bezug zu
- einem Ort auf einer für das Fortbewegungsmittel (10) vordefinierten Route, und/oder
- einer aktuellen Position des Fortbewegungsmittels (10) aufweisen.

11. Vorrichtung zur Bedienung von Multimedia-Inhalten in einem Fortbewegungsmittel (10) umfassend:
- eine Eingabeeinheit (12),
- eine Auswerteeinheit (5), und
- eine Anzeigeeinheit (7) umfassend einen Projektor,
- wobei die Anzeigeeinheit (7) eingerichtet ist, ein erstes Anzeigeelement (1a) repräsentierend eine erste Datei optisch am Dachhimmel (2) des Fortbewegungsmittels (2) mittels des Projektors anzuzeigen,
- die Eingabeeinheit (12) eingerichtet ist, eine Anwendereingabe bezüglich des ersten Anzeigeelementes (1a) zu erfassen, und
- die Auswerteeinheit (5) eingerichtet ist, im Ansprechen auf die erfasste Anwendereingabe eine mit der Datei verknüpfte Funktion des Fortbewegungsmittels (10) aufzurufen, **dadurch gekennzeichnet, dass** das Anzeigeelement (1a) zweidimensional verschieblich ist.

12. Vorrichtung nach Anspruch 11, welche eingerichtet ist, ein Verfahren nach einem der vorstehenden Ansprüche 1 bis 10 auszuführen.

13. Vorrichtung nach Anspruch 11 oder 12 weiter umfassend eine Schnittstelle zur Übertragung von Dateien von einem mobilen Anwenderendgerät (4) an einen Speicher (6) des Fortbewegungsmittels (10).

14. Fortbewegungsmittel umfassend
- einen Dachhimmel (2) und
- eine Vorrichtung (20) nach einem der Ansprüche 11 bis 13.

15. Computerprogrammprodukt umfassend Instruktionen, welche, wenn Sie auf einem programmierbaren Prozessor einer Auswerteeinheit (5) einer Vorrichtung (20) nach einem der Ansprüche 11 bis 13 ausgeführt werden, den Prozessor veranlassen, die Schritte eines Verfahrens nach einem der Ansprüche 1 bis 10 durchzuführen.

16. Signalfolge repräsentierend Instruktionen, welche, wenn Sie auf einem programmierbaren Prozessor einer Auswerteeinheit (5) einer Vorrichtung (20) nach einem der Ansprüche 11 bis 13 ausgeführt werden, den Prozessor veranlassen, die Schritte eines Verfahrens nach einem der Ansprüche 1 bis 10 durchzuführen.

## Claims

1. Method for controlling multimedia content in a means of transport (10), comprising the steps of
- optically projecting a first display element (1a) representing a first file on the roof lining (2) of a means of transport (10),
- receiving (400) a user input with respect to the first display element (1a) and, in response thereto,
- calling (500) a function of the means of transport (10) linked to the file, **characterized in that** the display element (1a) is displaceable in a two-dimensional manner.

2. Method according to Claim 1, also comprising
- optically projecting a second display element (1b) representing a second file onto the roof lining (2) of the means of transport (10),
- receiving a user input with respect to the second display element (1b) and, in response thereto,
- calling a function of the means of transport (10) linked to the second file (1b).

3. Method according to Claim 2, the first file and/or the second file being
- an image file, in particular a photo, preferably comprising a geographical position indication, and/or
- an audio file, and/or
- a video file, and/or
- a multimedia file.

4. Method according to one of the preceding claims,
- the user input comprising a drag-and-drop gesture (P),
- the first file or the second file
- being displaced to a predefined target position (3, 3a, 3b), and/or
- being displaced on top of one another, in particular.

5. Method according to one of the preceding claims,
- the called function of the means of transport (10) being assigned
- to an infotainment system, in particular a playback function or a playlist function, and/or
- to a navigation system, in particular to a definition of a destination or an intermediate destination and/or to a start of route guidance.

6. Method according to one of the preceding claims, also comprising
- transmitting (200) a data record representing the first file, in particular the first file itself, from a memory of a mobile user terminal (4) to a memory (6) of the means of transport (10).

7. Method according to one of the preceding claims, also comprising
- optically projecting a symbol for a playlist, which contains, in particular, at least one empty space as a potential target position for the display element (1a), and/or
- optically projecting a symbol for a navigation function, which, in particular comprising a compass representation, represents a potential target position for the display element (1a) for defining a route destination.

8. Method according to one of the preceding claims, also comprising
- detecting an acceleration of the means of transport and, in response thereto,
- automatically moving the first display element (1a) according to a virtual inertia of the display element (1a).

9. Method according to one of the preceding claims, also comprising
- displaying a context area (11) for the display element (1b), in which
- text information contained in the file, and/or
- text information received from outside the means of transport (10) is displayed.

10. Method according to one of the preceding claims, also comprising
- evaluating meta information from a file represented by the first display element (1a) and, in response thereto,
- automatically determining further information relating to the meta information via the Internet, in particular via an online reference work, having, in particular, a reference to
- a location on a route predefined for the means of transport (10), and/or
- a current position of the means of transport (10).

11. Apparatus for controlling multimedia content in a means of transport (10), comprising:
- an input unit (12),
- an evaluation unit (5), and
- a display unit (7) comprising a projector,
- the display unit (7) being set up to optically display a first display element (1a) representing a first file on the roof lining (2) of the means of transport (2) by means of the projector,
- the input unit (12) being set up to detect a user input with respect to the first display element (1a), and
- the evaluation unit (5) being set up to call a function of the means of transport (10) linked to the file in response to the detected user input, **characterized in that** the display element (1a) is displaceable in a two-dimensional manner.

12. Apparatus according to Claim 11, which is set up to carry out a method according to one of the preceding Claims 1 to 10.

13. Apparatus according to Claim 11 or 12, also comprising an interface for transmitting files from a mobile user terminal (4) to a memory (6) of the means of transport (10).

14. Means of transport comprising
- a roof lining (2) and
- an apparatus (20) according to one of Claims 11 to 13.

15. Computer program product comprising instructions which, when executed on a programmable processor of an evaluation unit (5) of an apparatus (20) according to one of Claims 11 to 13, cause the processor to carry out the steps of a method according to one of Claims 1 to 10.

16. Signal sequence representing instructions which, when executed on a programmable processor of an evaluation unit (5) of an apparatus (20) according to one of Claims 11 to 13, cause the processor to carry out the steps of a method according to one of Claims 1 to 10.

## Revendications

1. Procédé d'utilisation de contenus multimédias dans un moyen de locomotion (10), comprenant les étapes suivantes
- projection optique d'un premier élément d'affichage (1a) représentant un premier fichier sur le plafond (2) d'un moyen de locomotion (10),
- réception (400) d'une saisie d'utilisateur concernant le premier élément d'affichage (1a) et en réaction à celui-ci,
- invocation (500) d'une fonction du moyen de locomotion (10) combinée au fichier, **caractérisé en ce que** l'élément d'affichage (1a) peut être déplacé dans deux dimensions.

2. Procédé selon la revendication 1, comprenant en outre
- projection optique d'un deuxième élément d'affichage (1b) représentant un deuxième fichier sur le plafond (2) du moyen de locomotion (10),
- réception d'une saisie d'utilisateur concernant le deuxième élément d'affichage (1b) et en réaction à celui-ci,
- invocation d'une fonction du moyen de locomotion (10) combinée au deuxième fichier (1b).

3. Procédé selon la revendication 2, le premier fichier et/ou le deuxième fichier sont
- un fichier d'image, notamment une photographie, de préférence contenant une indication de position géographique, et/ou
- un fichier audio, et/ou
- un fichier vidéo, et/ou
- un fichier multimédia.

4. Procédé selon l'une des revendications précédentes,
- la saisie d'utilisateur comprenant un geste (P) de glisser-déposer nommé « Drag-and-drop » ci-dessous,
- le premier fichier ou le deuxième fichier étant notamment déplacé
- sur une position destinataire (3, 3a, 3b) prédéfinie et/ou
- l'un par rapport à l'autre.

5. Procédé selon l'une des revendications précédentes,
- la fonction invoquée du moyen de locomotion (10) étant associée à
- un système d'infodivertissement, notamment une fonction de lecture ou une fonction de listes de lecture et/ou
- un système de navigation, notamment une définition d'une destination ou d'une destination intermédiaire et/ou un démarrage d'un guidage d'itinéraire.

6. Procédé selon l'une des revendications précédentes, comprenant en outre
- transmission (200) d'un jeu de données représentant le premier fichier, notamment le premier fichier lui-même, depuis une mémoire d'un appareil d'utilisateur mobile (4) sur une mémoire (6) du moyen de locomotion (10).

7. Procédé selon l'une des revendications précédentes, comprenant en outre
- projection optique d'un symbole pour une liste de lecture qui contient notamment au moins un emplacement libre en tant que position de destination potentielle pour l'élément d'affichage (1a), et/ou
- projection optique d'un symbole pour une liste de navigation qui, en comprenant notamment une représentation de compas, représente une position de destination potentielle pour l'élément d'affichage (1a) en vue de définir une destination d'itinéraire.

8. Procédé selon l'une des revendications précédentes, comprenant en outre
- détection d'une accélération du moyen de locomotion et, en réaction à celle-ci
- déplacement automatique du premier élément d'affichage (1a) conformément à une inertie virtuelle de l'élément d'affichage (1a).

9. Procédé selon l'une des revendications précédentes, comprenant en outre
- affichage d'une zone contextuelle (11) associée à l'élément d'affichage (1b), dans laquelle sont affichées
- des informations textuelles contenues dans le fichier et/ou
- des informations textuelles reçues depuis l'extérieur du moyen de locomotion (10).

10. Procédé selon l'une des revendications précédentes, comprenant en outre
- interprétation de méta-informations d'un fichier représenté par le premier élément d'affichage (1a) et, en réaction à celles-ci,
- détermination automatique d'informations supplémentaires concernant les méta-informations, par le biais de l'Internet, notamment par le biais d'un ouvrage de référence en ligne, lesquelles possèdent notamment une référence à
- un lieu sur un itinéraire prédéfini pour le moyen de locomotion (10), et/ou
- une position actuelle du moyen de locomotion (10).

11. Dispositif d'utilisation de contenus multimédias dans un moyen de locomotion (10), comprenant :
- une unité de saisie (12),
- une unité d'interprétation (5) et
- une unité d'affichage (7) comprenant un projecteur,
- l'unité d'affichage (7) étant conçue pour afficher optiquement un premier élément d'affichage (1a) représentant un premier fichier sur le plafond (2) du moyen de locomotion (2) au moyen du projecteur,
- l'unité de saisie (12) étant conçue pour acquérir une saisie d'utilisateur concernant le premier élément d'affichage (1a), et
- l'unité d'interprétation (5) étant conçue pour, en réaction à la saisie d'utilisateur acquise, invoquer une fonction du moyen de locomotion (10) combinée au fichier, **caractérisé en ce que** l'élément d'affichage (1a) peut être déplacé dans deux dimensions.

12. Dispositif selon la revendication 11, lequel est conçu pour mettre en oeuvre un procédé selon l'une des revendications 1 à 10.

13. Dispositif selon la revendication 11 ou 12, comprenant en outre une interface destinée à la transmission de fichiers depuis un appareil d'utilisateur mobile (4) à une mémoire (6) du moyen de locomotion (10).

14. Moyen de locomotion comprenant
- un plafond (2) et
- un dispositif (20) selon l'une des revendications 11 à 13.

15. Produit de programme informatique comprenant des instructions qui, lorsqu'elles sont exécutées sur un processeur programmable d'une unité d'interprétation (5) d'un dispositif (20) selon l'une des revendications 11 à 13, amènent le processeur à exécuter les étapes d'un procédé selon l'une des revendications 1 à 10.

16. Instructions représentant une série de signaux qui, lorsqu'elles sont exécutées sur un processeur programmable d'une unité d'interprétation (5) d'un dispositif (20) selon l'une des revendications 11 à 13, amènent le processeur à exécuter les étapes d'un procédé selon l'une des revendications 1 à 10.
